# EUROPÄISCHE PATENTANMELDUNG

(11) **EP 0 603 492 A1**
(43) Veröffentlichungstag der Anmeldung: **29.06.1994**
(21) Anmeldenummer: 93117163.1
(22) Anmeldetag: 22.10.1993
(51) Int. Cl.: B01F 13/10, B01F 13/00

(54) **Vorrichtung zum Mischen und Austragen pastöser Massen**

(30) Priorität: 23.10.1992 DE 4235736
(71) Anmelder: Bergmann, Franz-Josef, Dr., D-69514 Laudenbach (DE)
(72) Erfinder: Raase, Karl, D-53773 Hennef (DE); Mutschlechner, Ilona, D-51575 Reichshof (DE); Bergmann, Franz-Josef, Dr., D-69514 Laudenbach (DE)

(57) **Zusammenfassung**

Die Vorrichtung zum Mischen und Austragen pastöser Massen ist charakterisiert durch eine Mischeinrichtung, bestehend aus einer Kombination eines Statikmischers (3), der Kanäle besitzt für die weitestgehende Zerteilung und Vorverteilung der Massen in eine Vielzahl dünner Stränge, ohne gegenseitiger Massenberührung, mit einem Dynamikmischer (4) extrem kleinen Mischvolumens.

## Beschreibung

Die Erfindung betrifft eine Vorrichtung zum Mischen und Austragen zweier oder mehr pastöser Massen gemäß Oberbegriff des Anspruches 1. Vorrichtungen dieser Art sind bekannt. Alle Vorrichtungen benötigen Mischeinrichtungen zur Aktivierung des Reaktionseffektes, der seinerseits für den Viskositätsverlauf und die Aushärtezeit verantwortlich ist. Die bisher als Mischeinrichtungen verwendeten Dynamik- und Statikmischer erfüllen ihre Aufgabe jedoch nur unvollkommen. Folgende Beispiele mögen das demonstrieren.

Die DE 28 09 228 C2 zeigt einen Dynamikmischer mit umlaufender, tiefgängiger Schnecke, unterteilt durch ortsfeste Leitscheiben. Nachteilig sind das große Mischgutvolumen, die Reibungserwärmung und die schwierige Reinigung.

Die DE 31 19 949 A1 zeigt einen Dynamikmischer mit einer Drahtwendelschnecke. Für eine ausreichende Mischleistung unter Vermeidung von Produktdurchschüssen im Drahtwendelkernbereich ist eine relativ lange Schnecke mit hoher Drehzahl erforderlich. Großes Mischgutvolumen mit hoher Erwärmung und die schwierige Reinigung sind so offensichtlich, daß dieser Mischer von vornherein als Wegwerfartikel konzipiert wurde.

Die DE 37 23 677 C2 zeigt einen Dynamikmischer mit kurzem, mit Rührstiften besetzten Kegelrotor. Wenn auf dessen kurzer Mischstrecke die Zerteilung und Verteilung der Produktströme mit der erforderlichen Mischleistung erzielt werden sollen, so erfordert das hohe Rotordrehzahlen. Schädliche Mischprodukterwärmungen und Überhitzungen im Antriebswellenbereich sind unvermeidlich.

Der Prospekt der Firma Beyer & Otto GmbH zeigt die Druckluftpistole TS-600/D mit einem langen Statikmischer. Statikmischer benötigen für brauchbare Mischleistungen bei pastösen Produkten wegen Fehlens turbulenter Strömungen zehn und mehr Mischstufen hintereinander und zur Vermeidung exzessiver Fließstücke relativ große Fließquerschnitte mit überproportional großem aushärtbaren Produktvolumen. Der Reinigungsaufwand ist erheblich.

Die DE 24 00 150 A1 zeigt einen typischen Statikmischer. Das große Mischvolumen und die schwierige Reinigung sind offensichtlich. Den notwendigen hohen Druck zum Durchpressen pastöser Massen kennt der Fachmann.

A. Die Erfindung hat sich die Aufgabe gestellt, eine Vorrichtung zu schaffen, die folgende Vorteile in sich vereint:
Intensive Mischung,
minimales Volumen aushärtbaren Mischgutes,
geringe Erwärmung,
moderater Fließdruck,
hohe Austragsleistung,
kein Nachlauf mit Austritt,
leichte Reinigung und
einfache Handhabung.

Demzufolge wird in der Erfindung vorgeschlagen, einem Dynamikmischer einen einstufigen Statikmischer vorzuschalten. Der Statikmischer übernimmt dabei die Aufgabe, die Produktströme in möglichst viele dünne, fadenförmige Einzelströme zu zerteilen und ohne gegenseitige Berührung so zu verteilen, daß sie einer neben dem anderen auf einer Kreislinie an den Dynamikmischer übergeben werden. Im Statikmischer entsteht dabei kein aushärtbares Produktgemisch. Der erforderliche Fließdruck für den einstufigen Statikmischer ist gering. Die Zerteilung und Verteilung der Produktströme wird vorzugsweise über konzentrische Ringräume des Statikmischers mit einer Vielzahl von Verteilbohrungen zum ringförmigen Übergabebereich an den Dynamikmischer vorgenommen.

Der Dynamikmischer weist bevorzugt einen kegelförmigen Mischraum auf, in dem ein in zentrischer Richtung mit Schikanen geringer Höhe besetzter Kegelrotor mit geringem Wandabstand niedertourig umläuft. Der Kegelrotormischer arbeitet somit zwecks Geringhaltung aushärtbarer Mischware mit geringer Ringraumstärke. Dank der im Statikmischer hervorragend vorverteilten Massen genügt erfreulicherweise ein solch kleines Mischvolumen mit einer geringen Rotordrehzahl für eine gute Mischwirkung. Zur Entlastung vom Mischerinnendruck wird zusätzlich eine Austragsschnecke vorgeschlagen, die zur Minimierung gemischter Ware und Vermeidung von Produktrücklauf mit geringstmöglicher Gangtiefe konstruiert ist. Die Austragsschnecke ist fest verbunden mit dem Mischerrotor.

Normalerweise wird der Rotor des Dynamikmischers zentrisch angetrieben. Ein exzentrischer Antrieb ist möglich über ein Zahnradvorgelege, das dabei zusätzlich als Mischhilfe dient.

Weiterhin wird vorgeschlagen, im Statikmischer vom Ringzentrum eines Produktes ein oder zwei Bohrungen in Richtung des Mischrotorantriebes vorzusehen. Dadurch wird aushärtbare Ware vom Antriebs- bzw. Lagerzapfen ferngehalten und vorgesorgt, daß sich zwischen Statikmischer und Dynamikmischer irgend welche Ware dem Mischprozeß entziehen kann.

B. Weitere Einzelheiten sind den Zeichnungen zu entnehmen, in denen die Erfindung anhand einer pneumatisch betätigten Vorrichtung dargestellt ist. Im einzelnen stellen die Zeichnungen dar:
- Figur 1: Ansicht einer Gesamtvorrichtung,
- Figur 2: einen Querschnitt nach A-A,
- Figur 3: einen Längsschnitt nach B-B,
- Figur 4: einen Querschnitt nach C-C und
- Figur 5: einen Längsschnitt ähnlich der Figur 3.

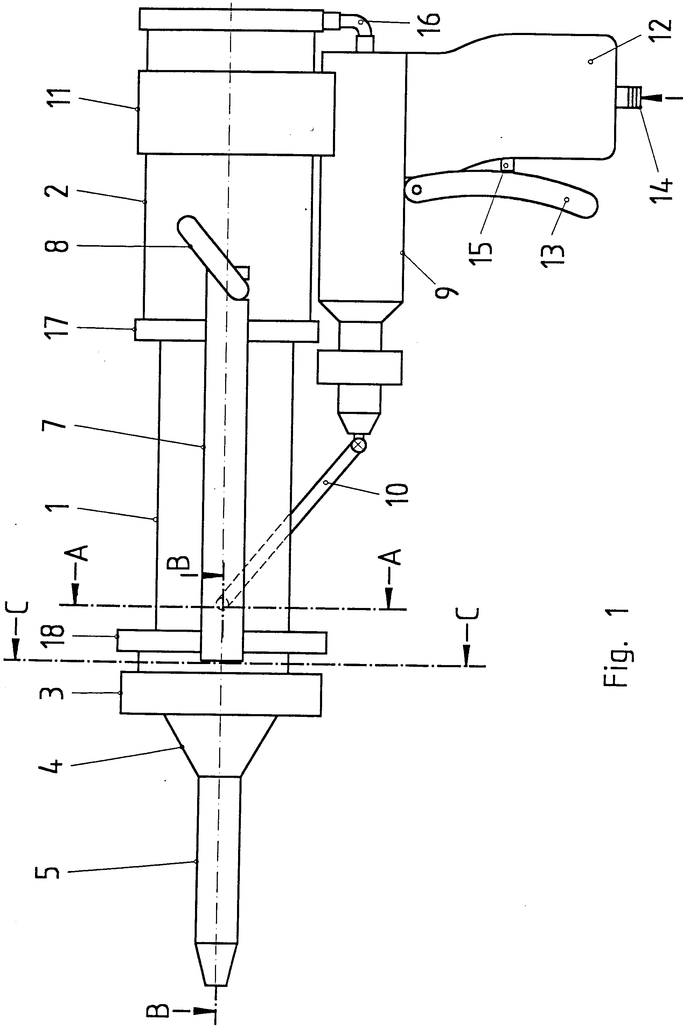

In Figur 1 ist die Gesamtansicht einer erfindungsgemäßen Vorrichtung mit pneumatischer Betätigung dargestellt. Die Kartuschenkammer 1 wird über den Druckluftzylinder 2 ausgepreßt. Die in der Kartusche befindliche pastöse Masse wird in dem Statikmischer 3 zerteilt in Produktfäden und verteilt den kugelförmigen Dynamikmischer 4 übergeben und durch die Schnecke 5 ausgetragen. Zusammengehalten wird das ganze durch die Zahnstangen 7 mit den Spannhebeln 8. Der Dynamikmischer wird angetrieben durch den Pneumatikmotor 9 über die elastische Welle 10. Der Druckluftzylinder 2 und der Pneumatikmotor 9 sind durch die Schelle 11 fest verbunden. Die Vorrichtung wird mittels des am Handgriff 12 befindlichen Ventilhebels 13 betätigt. Die am Anschluß 14 zugeführte Preßluft beaufschlagt nach Öffnen des Ventils 15 durch Drücken des Hebels 13 sowohl den Pneumatikmotor 9, als auch den Pressluftzylinder 2 über die Leitung 16. Die Scheiben 17 und 18 sind Anschlußelemente zwischen Pressluftzylinder 2 und Kartuschenkammern 1 bzw. zwischen Kartuschenkammer 1 und Statikmischer 3.

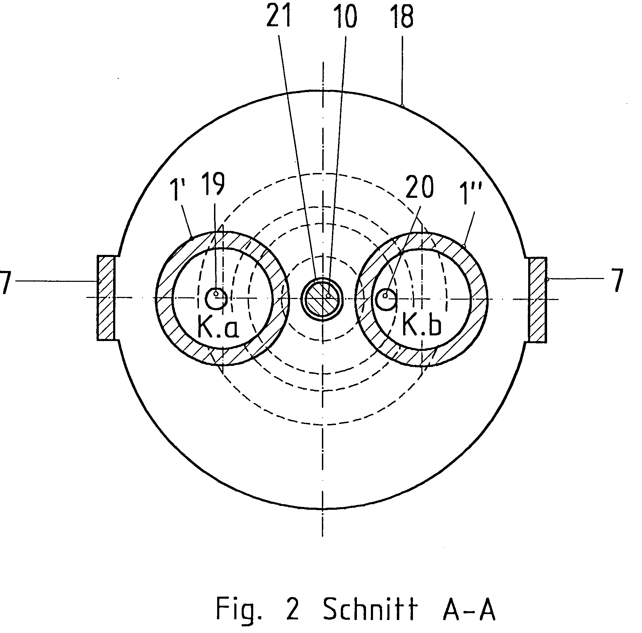

Die Figur 2 zeigt den Schnitt A-A der Vorrichtung nach Figur 1. Die Kartuschenkammer 1 ist für die Produktmasse a und die Kammer 1' für die Produktmasse b. Beide Kammern sind fixiert in der Scheibe 18, axial gehalten durch die Zugstangen 7. Die Bohrungen 19 und 20 in der Scheibe 18 dienen dem Übertritt der Produktmassen a und b in den nachfolgenden Statikmischer. Durchgang 21 ist hier für die Antriebswelle 10 des Dynamikmischers zentrisch angeordnet.

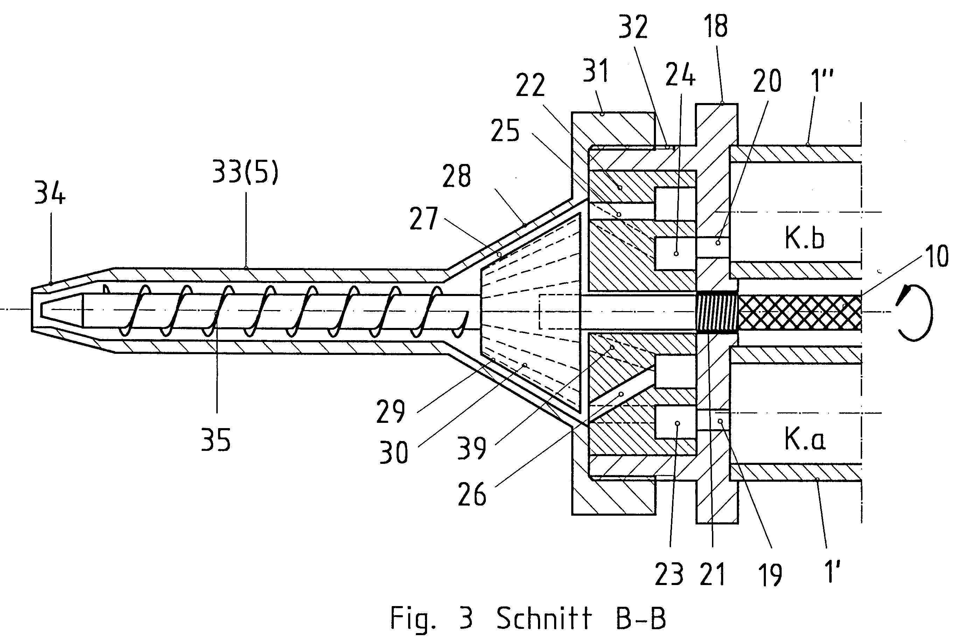

Die Figur 3 zeigt den Schnitt B-B der Figur 1. Die Kammern 1 und 1` geben ihre Masse a und b durch die Bohrungen 19 und 20 in der Schnecke 18 an die im Winkelelement 22 des Statikmischers 3 befindlichen Ringkammern 23 und 24 ab. Von dort fließen sie durch eine Vielzahl von Bohrungen 25 und 26 zum Mischraum 27 des Dynamikmischer 4. Dieser Mischraum wird begrenzt vom Mischermantel 28 und dem Mischkegelrotor 29. Letzterer kann mit radialen Mischelementen geringer radialer Höhe wie Noppen, Riefen oder Paddeln, in der Zeichnung mit 30 gekennzeichnet, besetzt sein. Angetrieben wir der Mischrotor 29 über eine elastische Welle 10, die durch den Durchgang 21 der Scheibe 18 eingeführt wird. Durch die Überwurfmutter 31, die fest mit dem Mantel 28 des Dynamikmischer 4 verbunden ist, wird der gesamte Mischbereich durch Aufschrauben auf den Gewindeansatz 32 der Scheibe 18 über metallisch dichtender Anpassung des Winkelelementes 22 zusammengehalten. - Die Bohrung 39 im Winkelelement 22 dient als Spülbohrung zur Vermeidung des Eintritts aushärtbarer Produkte in den Raum zwischen Statik - Winkelelement 22 und Dynamik - Rotor 29. - Der Schneckenmantel 33 der Ausstoßschnecke 5, hier aus einem Stück mit dem Mantel 28 des Dynamikmischers, endet mit dem Mundstück 34, das der jeweiligen Aufgabe angepaßt sein kann.

Der Schneckenkörper 35, im Mischrotor 29 befestigt, hat zwecks Minimierung aushärtbarer Produktmassen eine möglichst geringe Gangtiefe. Die Schneckenlänge ist so ausgelegt, daß beim Abstellen trotz Druckbeaufschlagung Kartuschenbehälter 1 und 1` kein Nachlaufen an der Düse 34 zu verzeichnen ist. Die niedrige Gangtiefe des Schneckenkörpers 35 erlaubt in Verbindung mit dem üblicherweise thixotropen Fließverhalten der hier verarbeiteten Produkte recht kurze Schnecken.

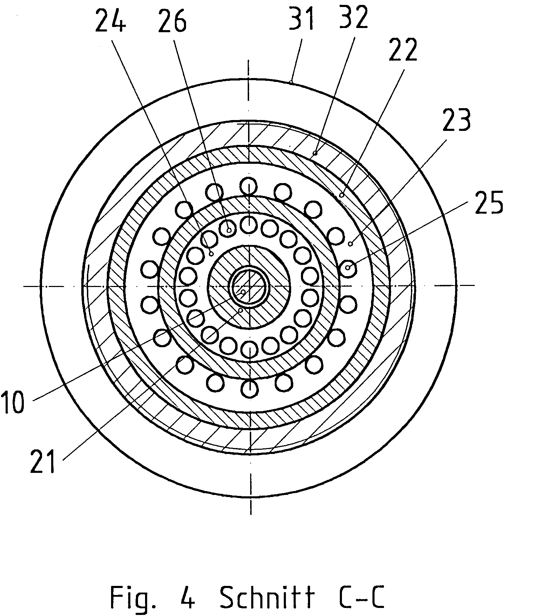

Die Figur 4 zeigt den Schnitt C-C der Figur 1. Zentrisch im Durchgang 21 liegt die Antriebswelle 10. Im Winkelelement 22 befinden sich die Ringräume 23 und 24, von denen die Produktkomponenten, durch eine Vielzahl von Bohrungen 25 und 26 in dünne Stränge zerteilt, weitergelenkt werden. Die Überwurfmutter 31 auf dem Gewindering 32 preßt das Winkelelement 22.

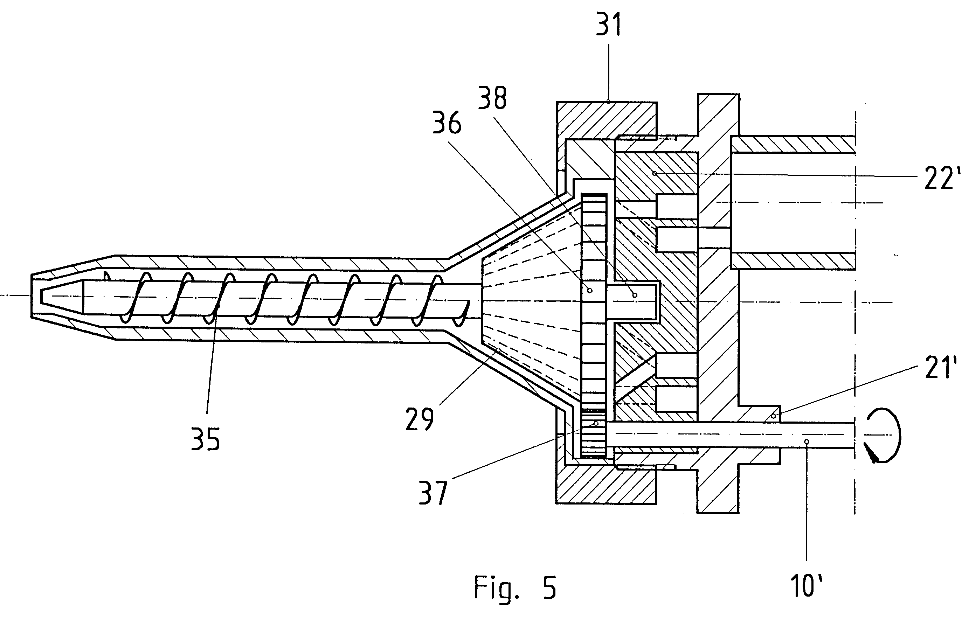

Die Figur 5 zeigt einen Schnitt ähnlich der Figur 2, aber mit exzentrischem Antrieb des Dynamikmischers. Am Mischrotor 29 ist das Zahnrad 36 angebracht, welches über das Ritzel 37 mittels der bei 21' eingeführten Antriebswelle 10' angetrieben wird. Zahnrad 36 ist über den Zapfen 38 im Winkelelement 22 gelagert. Abweichend von Figur 3 ist hier eine von den restlichen Mischerelementen getrennte Überwurfmutter 31 dargestellt.

## Patentansprüche

1. Vorrichtung zum Mischen und Austragen zweier oder mehr pastöser, in Kartuschen oder Schlauchpackungen vorproportionierter Massen, insbesondere zum Mischen von Mehrkomponenten - Kleb- und/oder Dichtstoffen, mit Vorratszylindern für die Produktkartuschen mit pneumatisch oder mechanisch beaufschlagten Dosierkolben und mit einem motorisch angetriebenen Dynamikmischer oder mit einem den Produktfließdruck nutzenden Statikmischer, **dadurch** **gekenn****zeichnet,** daß einem Dynamikmischer ein einstufiger Statikmischer vorgeschaltet ist.

2. Vorrichtung nach Anspruch 1, **dadurch gekennzeichnet,** daß der Statikmischer konzentrische Ringräume für jede Produktkomponente besitzt, von denen eine Vielzahl von Ventilbohrungen zum Ringzentrum des Dynamikmischers führen.

3. Vorrichtung nach Anspruch 1 und 2, **dadurch gekennzeichnet,** daß der Dynamikmischer einen kegelförmigen Mischraum besitzt, in dem ein in zentrischer Richtung mit Schikanen geringer Höhe besetzten Kegelrotor mit geringem Wandabstand niedertourig umläuft.

4. Vorrichtung nach Anspruch 1 bis 3, **dadurch gekennzeichnet,** daß dem Dynamikmischer eine Austragungsschnecke mit niedriger Gangtiefe nachgeschaltet ist.

5. Vorrichtung nach Anspruch 1 bis 4, **dadurch gekennzeichnet,** daß der Dynamikmischer zentrisch angetrieben wird.

6. Vorrichtung nach Anspruch 1 bis 4, **dadurch gekennzeichnet,** daß der Dynamikmischer exzentrisch über Zahnräder angetrieben wird.

7. Vorrichtung nach Anspruch 1 bis 6, **dadurch gekennzeichnet**, daß von einem Ringzentrum des Statikmischers eine oder zwei Bohrungen in Richtung Lagerzapfen des Statikmischers verlaufen.
